Europäisches Patentamt

European Patent Office

Office européen des brevets

(11) Veröffentlichungsnummer: **0 320 671**
**A2**

(12) **EUROPÄISCHE PATENTANMELDUNG**

(21) Anmeldenummer: **88119514.3**

(22) Anmeldetag: **23.11.88**

(51) Int. Cl.⁴: **G06K 9/18**

(30) Priorität: **15.12.87 DE 3742485**

(43) Veröffentlichungstag der Anmeldung:
**21.06.89 Patentblatt 89/25**

(84) Benannte Vertragsstaaten:
**AT BE CH DE ES FR GB IT LI NL**

(71) Anmelder: **Erwin Sick GmbH Optik-Elektronik**
**Sebastian-Kneipp-Strasse 1**
**D-7808 Waldkirch(DE)**

(72) Erfinder: **Ostertag, Klaus**
**Engadiner Strasse 38**
**D-8000 München 71(DE)**
Erfinder: **Pietzsch, Karl, Dr.**
**Richard-Wagner-Strasse 2**
**D-8192 Geretsried(DE)**
Erfinder: **Schmalfuss, Harald, Dr.**
**Böhmerwaldstrasse 9**
**D-8192 Geretsried(DE)**
Erfinder: **Siersch, Wolfgang**
**Camerloher Strasse 61c**
**D-8000 München 21(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) Optische Abtastvorrichtung.

(57) Es wird eine Abtastvorrichtung zur Abtastung von auf einem Träger (18), insbesondere einer CD-Platte, aufgebrachten Klarschriftzeichen eines Zeichenbandes (20) beschrieben. Die Beobachtungsrichtung eines Lichtempfängers (16) ist in bezug auf die Einfallsrichtung des von einer Lichtquelle (10) abgegebenen, auf die die Struktur eines optischen Gitters aufweisenden Klarschriftzeichen auftreffenden Lichts derart gewählt, daß vom Lichtempfänger (16) nur Licht einer Beugungsordnung ungleich Null empfangen wird. Der Kontrast zwischen den zu lesenden Klarschriftzeichen und dem Untergrund wird damit optimiert.

Fig. 1

Die Erfindung betrifft eine optische Abtastvorrichtung zur Abtastung von auf einem Träger, insbesondere einer CD-Platte, aufgebrachten Klarschriftzeichen oder dergleichen, mit einer den Träger beaufschlagenden Lichtquelle sowie mit einem Lichtempfänger zum Empfang von vom Träger stammendem Licht.

Optische Datenträger, beispielsweise CD-Platten (Compact Disc), können Bereiche mit Ziffern, Buchstaben, Symbole und dergleichen umfassenden Klarschriftzeichen aufweisen.

Beispielsweise sind die herkömmlichen CD-Platten entsprechend einer weltweiten Spezifikation mit einem ringförmigen Bereich versehen, der in der Regel keine festgelegten Informationen enthält. Die Art und Weise, wie dieser ringförmige Bereich genutzt wird, kann vom jeweiligen CD-Platten-Hersteller frei gewählt werden.

Die meisten CD-Platten-Hersteller sehen in diesem ringförmigen Bereich neben werbendem Klartext u.a. eine aus Ziffern, Buchstaben und Symbolen bestehende Klarzeichen-Codierung vor. Das auf diese Weise gebildete Zeichenband kann u.a. Angaben über die Musikinformation der CD-Order enthalten.

Der wesentliche Vorteil dieser Klarschriftzeichen-Codierung besteht darin, daß sie jederzeit ohne Hilfsmittel gelesen werden kann.

Sollen beispielsweise während einer optischen CD-Inspektion erfaßte Serienfehler bis zur Spritzgußmaschine zurückverfolgt werden, so muß unter Umständen auf die Klartext-Codierung zurückgegriffen werden. Die optische CD-Inspektion findet meistens zwischen der CD-Schutzlackierung und dem Labeldrucken, statt. Bei dieser Inspektion werden optische Defekte der CD-Ausleseseite erfaßt. Dabei werden auch Serienfehler aufgedeckt, die auf Störungen der Produktionslinie zurückzuführen sind. Bei einer Zurückverfolgung dieser Serienfehler bis zur Spritzgußmaschine muß die Klartext-Codierung gelesen werden.

Ferner müssen die Platten in einem weiteren Stadium des Herstellungsprozesses entsprechend ihrer Musikinformation sortiert werden, wobei wiederum auf die Klartext-Codierung zurückzugreifen ist. In der Regel werden die von mehreren Spritzgußmaschinen gleichzeitig produzierten Platten bei den weiteren Produktionsschritten zusammengeführt, um danach vor dem Aufdruck des Labels gemäß ihrer Musikinformation sortiert zu werden. Dies ist nur mit Hilfe der Klartext-Codierung, also der Ordernummer, möglich.

Die Kapazität neuerer Inspektionssysteme beträgt ca. 2000 CD/h. Die Kapazität der Druckmaschine zum Aufbringen von Labels etwa 3000 bis 4000 CD/h.

Bei derartigen Plattendurchsätzen ist eine serienmäßige, manuelle Lesung der Klarschrift-Codierung auf Dauer nicht mehr möglich.

Es sind automatische Klarschriftlesesysteme bekannt, die mittels einer CCD(Ladungsspeicher)-Zeilenkamera oder CCD-Matrixkamera (oder eines Laserscanners) die Klarschrift-Codierung lesen und auswerten. Hierbei wird die gelesene Codierung mit gespeicherten Codierungen verglichen, um die jeweilige Zuordnung vornehmen zu können bzw. die Platten entsprechend zu sortieren. In solchen Systemen wird das gelesene und gespeicherte Graubild zunächst in ein Binärbild umgewandelt.

Die Zuverlässigkeit der Lesung als auch die mögliche Geschwindigkeit der Lesung und Auswertung hängt wesentlich vom optischen Kontrast der Zeichen zum Untergrund ab.

Der Erfindung liegt die Aufgabe zugrunde, eine optische Abtastvorrichtung der eingangs genannten Art zu schaffen, die bei einfachem Aufbau und problemloser Handhabung eine zuverlässigere und gegebenenfalls schnellere, insbesondere automatische Ablesung der auf dem Träger aufgebrachten Klarschriftzeichen gewährleistet.

Die Aufgabe wird nach der Erfindung dadurch gelöst, daß die Beobachtungsrichtung des Lichtempfängers in bezug auf die Einfallsrichtung des von der Lichtquelle abgegebenen, auf die die Struktur eines optischen Gitters aufweisenden Klarschriftzeichen auftreffenden Lichts derart gewählt ist, daß vom Lichtempfänger nur Licht einer Beugungsordnung ungleich Null empfangen wird.

Aufgrund dieser Ausbildung wird der optische Kontrast zwischen den Klarschriftzeichen und dem Untergrund bzw. dem nichtbeschrifteten Teil des Trägers optimiert. Ein maximaler Kontrast wird dadurch erhalten, daß das vom normalen, nichtbeschrifteten Trägeruntergrund stammende Licht bzw. durch einen durchsichtigen Träger transmittierte Licht den Lichtempfänger nicht mehr beaufschlagen kann, sondern dieser Lichtempfänger lediglich Licht zumindest einer Beugungsordnung ungleich Null empfängt.

Zweckmäßigerweise ist die Beobachtungsrichtung hierbei derart gewählt, daß vom Lichtempfänger nur Licht einer einzigen Beugungsordnung empfangen wird.

Vorteilhafterweise wird Licht einer solchen Beugungsordnung ausgewählt, welche die höchste Lichtintensität aufweist.

Vorzugsweise wird die Beugungsordnung minus Eins oder plus Eins ausgewählt.

Die abzutastenden Klarschriftzeichen können vorteilhafterweise die Struktur eines optischen Phasengitters aufweisen.

Wird die Struktur eines optischen Reflexionsgitters gewählt, so können Lichtquelle und Lichtempfänger auf derselben Seite des die Klarschriftzeichen tragenden Trägers angeordnet sein.

Gemäß einer besonders vorteilhaften Ausfuhrungsvariante ist im Falle des Vorliegens einer CD-Platte als Träger die Gitterstruktur der abzutastenden Klarschriftzeichen durch die Spuren der CD-Platte bestimmt. Hierbei wird erfindungsgemäß der Umstand ausgenutzt, daß die Klarschrift-Codierungen bereits beim Mastering-Prozeß aufgebracht werden können und die Ziffern, Buchstaben, Symbole oder dergleichen selbst aus Spuren ähnlich denen der Musikinformation bestehen. Daraus folgt, daß die Klarschriftzeichen selbst die Struktur eines optischen Phasengitters aufweisen. Die Eigenschaften dieses optischen Phasengitters werden erfindungsgemäß zur Erhöhung des Kontrastes zwischen den Klarschriftzeichen und dem normalen, nichtbeschrifteten Untergrund der CD-Platte ausgenutzt.

Die Lichtquelle soll bevorzugt schmalbandiges, monochromatisches Licht abgeben. Hierbei kann die Lichtquelle durch einen Laser, vorzugsweise eine Laserdiode gebildet sein. Die Lichtquelle kann aber auch eine schmalbandige Leuchtdiode sein.

Die Wellenlänge des von der Lichtquelle abgegebenen Lichts und/oder die Gitterkonstante der Gitterstruktur der Klarschriftzeichen sind zweckmäßigerweise derart gewählt, daß nur diskrete, räumlich voneinander getrennte Beugungsordnungen auftreten. Hierbei ist vorteilhafterweise darauf zu achten, daß nur eine geringe Anzahl solcher diskreter, räumlich gut getrennter Beugungsordnungen auftritt.

Um auf möglichst einfache Weise das Umgebungslicht optisch ausfiltern zu können, ist als Lichtquelle vorzugsweise eine Infrarotlichtquelle vorgesehen.

Insbesondere beim Einsatz einer Laserdiode oder einer Leuchtdiode kann durch hochfrequentes Takten der Lichtquelle bei gleichzeitiger Signalfilterung der Einfluß eventuellen Umgebungslichtes weiter reduziert werden.

Die durch die Einfallsrichtung des von der Lichtquelle abgegebenen Lichts und die Beobachtungsrichtung des Lichtempfängers bestimmte Ebene kann zweckmäßigerweise gegen die Senkrechte des optischen Trägers verkippt sein, so daß beispielsweise im Falle einer CD-Platte der Bereich um die Drehachse der Platte beidseitig frei zugänglich ist. Die Abtastvorrichtung kann demnach problemlos in bestehende Inspektionsanlagen integriert werden. Im Falle einer CD-Platte kann damit insbesondere eine weitere Drehteller-Zwischenstation eingespart werden. Durch die Verkippung wird dem Umstand Rechnung getragen, daß der Freiraum um die zu inspizierende CD-Platte herum begrenzt ist und andererseits die CD-Platte während der Inspektion mechanisch auf einem Drehteller festgeklemmt ist. Das Festklemmen geschieht in der Regel gleichzeitig von oben und unten, so daß der Bereich um die Drehachse zu beiden Seiten der Platte benötigt wird.

Weitere vorteilhafte Ausführungsvarianten der Erfindung sind in den Unteransprüchen angegeben.

Die Erfindung wird im folgenden anhand von Ausführungsbeispielen unter Bezugnahme auf die Zeichnung naher erläutert; in dieser zeigt:

Fig. 1 eine schematische Darstellung einer optischen Abtastvorrichtung zur Abtastung von auf einer CD-Platte aufgebrachten Klarschriftzeichen,

Fig. 2 eine schematische Darstellung einer weiteren Ausführungsvariante der optischen Abtastvorrichtung, bei der die aus Lichtquelle und Lichtempfänger bestehende Anordnung gegenüber der Senkrechten der CD-Platte verkippt ist, und

Fig. 3 ein Blockschaltbild eines die optische Abtastvorrichtung umfassenden Klarschriftlesers.

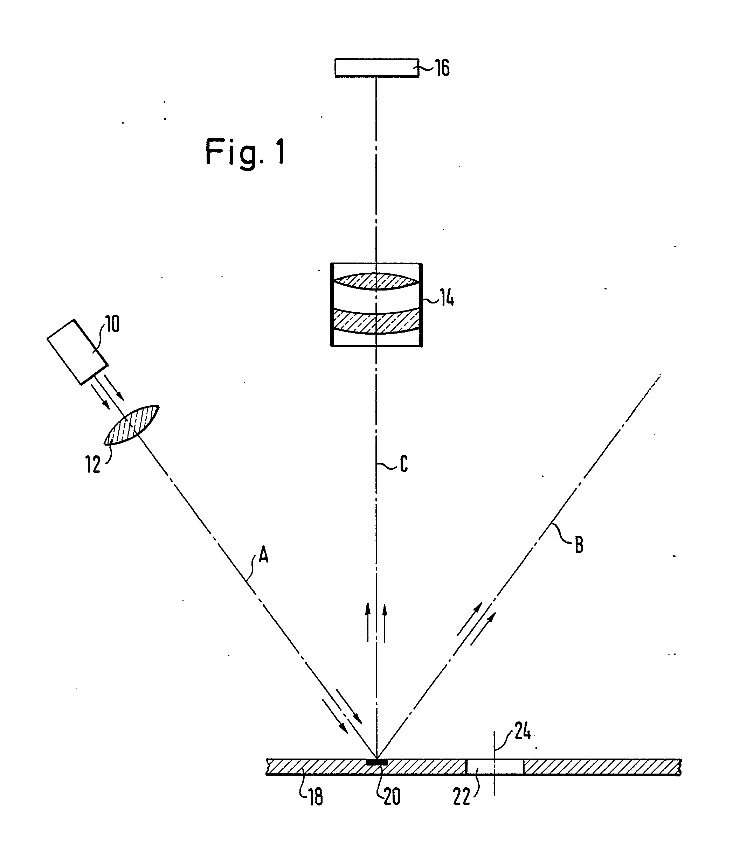

In Fig. 1 ist in schematischer Darstellung eine optische Abtastvorrichtung zur Abtastung eines Zeichenbandes 20 gezeigt, welches auf einer als Träger dienenden CD-Platte 18 aufgebracht ist.

Eine chromatisch schmalbandige Lichtquelle 10 wird von einem Kondensor 12 auf das auf die CD-Platte 18 aufgebrachte Zeichenband 20 abgebildet.

Dieses Zeichenband 20 wird wiederum über ein Objektiv 14 auf einen als Sensor dienenden Lichtempfänger 16 abgebildet. Als Lichtempfänger 16 ist eine Diodenzeile oder ein Diodenarray mit hoher Auflösung vorgesehen.

Das Objektiv 14 empfängt nur Licht C einer Beugungsordnung, nämlich der minus ersten Beugungsordnung. Das vom Untergrund der CD-Platte 18 reflektierte Licht B nullten Ordnung fällt nicht in das Objektiv 14.

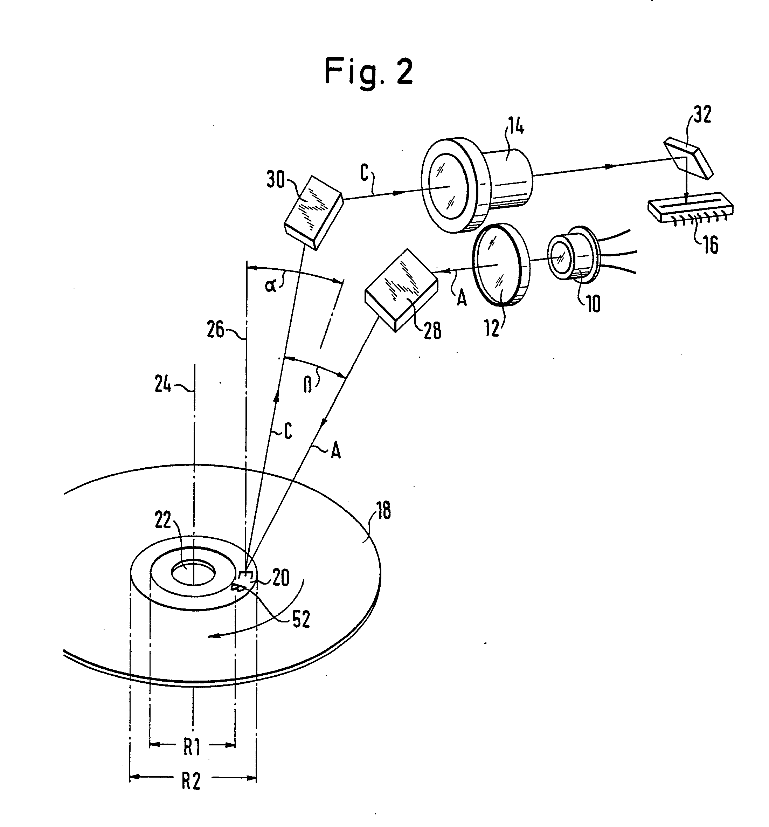

Das Zeichenband 20 umfaßt Klarschriftzeichen 52 (vgl. Fig. 2), die aus Ziffern, Buchstaben, Symbolen oder dergleichen bestehen können.

Die vorhandenen Klarschrift-Codierungen im Zeichenband 20 werden bereits beim Mastering-Prozeß aufgebracht, so daß die Ziffern, Buchstaben, Symbole oder dergleichen aus Spuren ähnlich denen der Musikinformation bestehen. Die Klarschriftzeichen 52 (vgl. Fig. 2) besitzen demnach die Struktur eines optischen Phasengitters.

Die Eigenschaften dieses optischen Phasengitters werden für die Beleuchtung so ausgenutzt, daß sich ein Optimum an optischem Kontrast zwischen den Zeichen und dem Untergrund, bzw. der Oberfläche der CD-Platte 18, ergibt.

Die Lichtquelle 10 gibt schmalbandiges, monochromatisches Licht ab. Geeignet hierfür ist ein Laser, insbesondere ein Laserdiode. Es kann jedoch auch eine intensive schmalbandige Leuchtdiode vorgesehen sein.

Die Wellenlänge der Lichtquelle 10 wird derart gewählt, daß aufgrund des Verhältnisses von Lichtwellenlänge zum Abstand der optischen Gitterspuren, nämlich dem Spurabstand auf der CD-Platte 18, außer der nullten Beugungsordnung (direkter Reflex) nur wenige diskrete, räumlich gut getrennte intensive Beugungsordnungen auftreten.

Um Signalstörungen durch die Überlagerung mehrerer Beugungsordnungen zu vermeiden, wird mit dem Lichtempfänger 16 bzw. einer Lese-Kamera nur in einer Beugungsordnung beobachtet. Aus Gründen der Signalintensität wird die plus erste oder die minus erste Beugungsordnung, im vorliegenden Fall die minus erste, gewählt.

Die Richtung des einfallenden Lichts A und die Beobachtungsrichtung werden demnach derart gewählt, daß vom Objektiv 14 bzw. vom Lichtempfänger 16 nur Licht der Beugungsordnung minus eins, also einer Beugungsordnung ungleich Null, empfangen wird.

Die Lichtquelle 10 ist vorzugsweise eine Infrarotlichtquelle, so daß auf relativ einfache Weise auch noch das Umgebungslicht optisch ausgefiltert werden kann. Beim Einsatz beispielsweise einer Laserdiode oder einer Leuchtdiode kann durch hochfrequentes Takten der Lichtquelle bei gleichzeitiger Signalfilterung der Einfluß eventuellen Umgebungslichtes weiter reduziert werden.

Das Zeichenband 20 ist in einem ringförmigen Bereich angeordnet, welcher eine die Drehachse 24 umschließende Bohrung 22 der CD-Platte 18 umgibt. Dieser zwischen dem Radius R1 = 16,5 mm und dem Radius R2 = 23 mm liegende ringförmige Bereich weist keine spezifizierte Information auf. Der jeweilige CD-Platten-Hersteller kann die Art und Weise der Nutzung dieses Bereichs frei wählen.

In der Regel enthält dieser Bereich neben werbendem Klartext u.a. eine aus Ziffern, Buchstaben und Symbolen bestehende Klarschriftzeichen-Codierung. Der Klartext befindet sich in der Regel etwa auf der Höhe des Radius 20 mm. Die Zeichen weisen meist eine Höhe von etaw 2,5 mm auf.

Bei der Ausführung gemäß Fig. 2 sind als Klarschriftzeichen 52 die Buchstaben "E" und "B" zu erkennen.

Das in Fig. 2 gezeigte Ausführungsbeispiel weist ferner die Besonderheit auf, daß die durch die Einfallsrichtung des von der Lichtquelle 10 abgegebenen Lichts A und die Beobachtungsrichtung des Lichtempfängers 16 bestimmte Ebene gegen die Senkrechte 26 der CD-Platte 18 um den Winkel α verkippt ist. Das vom Zeichenband 20 bzw. den Klarschriftzeichen 52 ausgehende Licht der minus ersten Beugungsordnung schließt mit dem einfallenden Licht A einen Winkel β ein. Die optischen Achsen von Sender und Empfänger sind demnach auch ohne die Verwendung eines Strahlenteilers, der zu einem Lichtverlust führen würde, getrennt. Durch die steilere Anordnung der optischen Achsen von Sender und Empfänger ist das in Fig. 2 gezeigte System unempfindlicher gegenüber einer Defokussierung.

Falls durch die schiefe Beobachtung des Zeichenbandes 20 unter dem Winkel α eine Defokussierung oder Zeichenverzerrung in Erscheinung treten sollte, so wäre diese durch die Einhaltung der Scheimpflugbedingung zwischen dem Zeichenband 20, dem Objektiv 14 und dem Lichtempfänger 16 zu korrigieren.

Das vom Kondensor 12 stammende Licht A der Lichtquelle 10 wird über einen Umlenkspiegel 28 zum Zeichenband 20 hin gerichtet. Das vom Zeichenband 20 austretende Licht C der minus ersten Beugungsordnung wird über einen Umlenkspiegel 30 dem Objektiv 14 zugeführt. Über einen weiteren Umlenkspiegel 32 wird das vom Objektiv 14 kommende Licht zum Lichtempfänger 16 hin umgelenkt.

Auch bei der Darstellung gemäß Fig. 2 ist wiederum erkennbar, daß das Zeichenband in einem ringförmigen Bereich angeordnet ist, welcher eine die Drehachse 24 umschließende Bohrung 22 der CD-Platte 18 umgibt.

Ein wesentlicher Vorteil dieser Ausführungsvariante gemäß Fig. 2 besteht darin, daß der Bereich um die Drehachse 24 zu beiden Seiten der CD-Platte 18 freigehalten ist und die Platte demnach beispielsweise für eine Inspektion problemlos beidseitig geklemmt auf einem Drehteller gehalten werden kann.

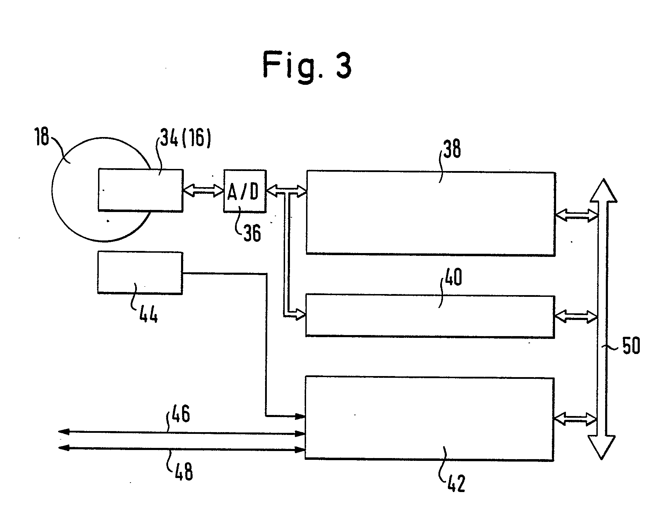

In Fig. 3 ist ein Blockschaltbild eines auf der Basis der erfindungsgemäßen optischen Abtastvorrichtung arbeitenden Klarschriftlesers gezeigt.

Im Bereich oberhalb der CD-Platte 18 ist eine den Lichtempfänger 16 (vgl. Fig. 1, 2) umfassende Kamera 34 angeordnet. Die Ausgangssignale dieser Kamera 34 sind einem Analog/Digital-Wandler 36 zugeführt, dessen Ausgang einerseits mit einem Eingang eines Bildspeichers 38 und andererseits mit dem Eingang eines Zeichenpositionserkenners 40 verbunden ist.

Es ist ferner ein Winkelcoder 44 vorgesehen, der mit einem Auswerterechner 42 in Verbindung steht.

Der Bildspeicher 38, der Zeichenpositionserkenner 40 sowie der Auswerterechner 42 sind untereinander über einen Systembus 50 verbunden. Der Auswerterechner 42 steht ferner über eine bidirektionale Leitung 46 mit einem Terminal und über eine bidirektionale Leitung 48 mit einem CD-Handlingssystem in Verbindung.

BEZUGSZEICHENLISTE

10 Lichtquelle
12 Kondensor

14 Objektiv
16 Lichtempfänger
18 CD-Platte
20 Zeichenband
22 Bohrung
24 Drehachse
26 Senkrechte
28 Umlenkspiegel
30 Umlenkspiegel
32 Umlenkspiegel
34 Kamera
36 Analog/Digital-Wandler
38 Bildspeicher
40 Zeichenpositionserkenner
42 Auswerterechner
44 Winkelcoder
46 Bidirektionale Leitung
48 Bidirektionale Leitung
50 Systembus
52 Klarschriftzeichen
R1 Radius
R2 Radius
A Einfallendes Licht
B Reflektiertes Licht nullter Ordnung
C Licht der minus ersten Beugungsordnung
α Einfallswinkel gegen die Senkrechte 26
β Winkel zwischen den optischen Achsen von Lichtquelle und Lichtempfänger

## Ansprüche

1. Optische Abtastvorrichtung zur Abtastung von auf einem Träger (18), insbesondere einer CD-Platte, aufgebrachten Klarschriftzeichen (52) oder dergleichen, mit einer den Träger beaufschlagenden Lichtquelle (10) sowie mit einem Lichtempfänger (16) zum Empfang von vom Träger stammendem Licht,
dadurch **gekennzeichnet,**
daß die Beobachtungsrichtung des Lichtempfängers (16) in bezug auf die Einfallsrichtung des von der Lichtquelle (10) abgegebenen, auf die die Struktur eines optischen Gitters aufweisenden Klarschriftzeichen (52) auftreffenden Lichts derart gewählt ist, daß vom Lichtempfänger (16) nur Licht von Beugungsordnungen ungleich Null empfangen wird, wobei zweckmäßigerweise die Beobachtungsrichtung derart gewählt ist, daß vom Lichtempfänger (16) nur Licht einer einzigen Beugungsordnung empfangen wird.

2. Optische Abtastvorrichtung nach Anspruch 1,
dadurch **gekennzeichnet,**
daß die Beobachtungsrichtung derart gewählt ist, daß vom Lichtempfänger (16) Licht einer Beugungsordnung höchster Intensität empfangen wird und/oder daß die Beugungsordnung minus Eins oder plus Eins ausgewählt ist.

3. Optische Abtastvorrichtung nach einem der vorhergehenden Ansprüche,
dadurch **gekennzeichnet,**
daß die abzutastenden Klarschriftzeichen (52) die Struktur eines optischen Phasengitters oder eines optischen Reflexionsgitters aufweisen.

4. Optische Abtastvorrichtung nach einem der vorhergehenden Ansprüche, wobei als Träger (18) eine CD-Platte vorgesehen ist,
dadurch **gekennzeichnet**
daß die Gitterstruktur der abzutastenden Klarschriftzeichen (52) durch die Spuren der CD-Platte bestimmt ist.

5. Optische Abtastvorrichtung nach einem der vorhergehenden Ansprüche,
dadurch **gekennzeichnet,**
daß eine chromatisch schmalbandiges Licht abgebende Lichtquelle (10) vorgesehen ist, wobei vorzugsweise die Lichtquelle (10) monochromatisches Licht abgibt.

6. Optische Abtastvorrichtung nach einem der vorhergehenden Ansprüche,
dadurch **gekennzeichnet,**
daß die Lichtquelle (10) durch einen Laser vorzugsweise eine Laserdiode oder durch eine schmalbandige Leuchtdiode gebildet ist.

7. Optische Abtastvorrichtung nach einem der vorhergehenden Ansprüche,
dadurch **gekennzeichnet,**
daß die Wellenlänge des von der Lichtquelle (10) abgegebenen Lichts und/oder die Gitterkonstante der Gitterstruktur der Klarschriftzeichen (52) derart gewählt sind, daß nur diskrete, räumlich voneinander getrennte Beugungsordnungen auftreten, und/oder daß die Lichtquelle (12) eine Infrarotlichtquelle ist und/oder daß Mittel zur optischen Ausfilterung des Umgebungslichts vorgesehen sind.

8. Optische Abtastvorrichtung nach einem der vorhergehenden Ansprüche,
dadurch **gekennzeichnet,**
daß die Lichtquelle (12) hochfrequent getaktet ist und empfangsseitig ein auf die Taktfrequenz abgestimmtes Signalfilter vorgesehen ist, und/oder daß der Lichtempfänger (16) eine Diodenzeile oder ein Diodenarray umfaßt.

9. Optische Abtastvorrichtung nach einem der vorhergehenden Ansprüche,
dadurch **gekennzeichnet,**
daß die durch die Einfallsrichtung des von der Lichtquelle (10) abgegebenen Lichts und die Beobachtungsrichtung des Lichtempfängers (16) bestimmte Ebene gegen die Senkrechte (26) des optischen Trägers (18) verkippt ist.

10. Optische Abtastvorrichtung nach einem der vorhergehenden Ansprüche,
dadurch **gekennzeichnet,**
daß der Beleuchtungsstrahlengang zur Erhöhung der Beleuchtungsintensität auf dem Objekt eine anamorphotische Beleuchtungsoptik enthält.

Fig. 1

# Fig. 2

# Fig. 3